(19) Europäisches Patentamt
European Patent Office
Office européen des brevets

(11) Veröffentlichungsnummer: **0 678 562 A1**

# (12) EUROPÄISCHE PATENTANMELDUNG

(21) Anmeldenummer: **95105324.8**

(22) Anmeldetag: **08.04.95**

(51) Int. Cl.6: **C09D 4/00**, C09D 133/06, C09D 5/03

(30) Priorität: **18.04.94 DE 4413436**

(43) Veröffentlichungstag der Anmeldung: **25.10.95 Patentblatt 95/43**

(84) Benannte Vertragsstaaten: **BE DE ES FR GB IT NL SE**

(71) Anmelder: **BASF Lacke + Farben AG**
**Glasuritstrasse 1**
**D-48165 Münster-Hiltrup (DE)**

(72) Erfinder: **Blum, Rainer**
**Rüdigerstr. 64**
**D-67069 Ludwigshafen (DE)**

(74) Vertreter: **Bieberbach, Andreas, Dr. et al**
**BASF Aktiengesellschaft**
**D-67056 Ludwigshafen (DE)**

## (54) Verfahren zur Lackierung von Gegenständen unter Verwendung strahlungshärtbarer Pulverlacke.

(57) Die Erfindung betrifft ein Verfahren zur Lackierung von Gegenständen mit Polymerisate enthaltenden Pulverlacken, die auf die Oberfläche des zu lackierenden Substrates aufgebracht, aufgeschmolzen und durch UV-Strahlung vernetzt werden, wobei als Polymerisate Copolymerisate eingesetzt werden, die mindestens ein copolymerisierbares ethylenisch ungesättigtes, im triplettangeregten Zustand zur Wasserstoffabstraktion befähigtes aromatisches oder teilaromatisches Keton sowie mindestens zwei weitere ethylenisch ungesättigte copolymerisierbare organische Verbindungen einpolymerisiert enthalten.

EP 0 678 562 A1

Die vorliegende Erfindung betrifft ein Verfahren zur Lackierung von Gegenständen mit Polymerisate enthaltenden Pulverlacken, die auf die Oberfläche des zu lackierenden Substrates aufgebracht, aufgeschmolzen und durch UV-Strahlung vernetzt werden.

Unter strahlungshärtbaren Pulverlacken versteht man im allgemeinen feinteilige, bei Lagerung nicht zusammenbackende (blockfeste) Pulver organischer Polymerer, die in der Regel elektrostatisch aufladbar sind, in einem elektrischen Feld auf Substrate aufgesprüht oder durch andere Methoden, z.B. Wirbelsintern auf das zu lackierende Substrat aufgebracht werden. Auf den Substraten werden die Pulver durch Erhitzen geschmolzen, dadurch in glatte Überzüge überführt und dann durch eine photochemisch initiierte Reaktion vernetzt.

Bei Pulverlacken sind sowohl teilweise vernetzte als auch rein thermoplastisch aufschmelzbare Lacke im Einsatz. Für Anwendungen, bei denen hohe Anforderungen an Wetterbeständigkeit, Kratzfestigkeit, Korrosionsschutz, Elastizität und Glanzhaltung gestellt werden, z.B. bei der Automobillackierung kommen nur vernetzte Systeme in Frage; rein thermoplastisch aufgesinterte Pulver können diesen Forderungen nicht genügen. Zur Vernetzung der z.Z. eingesetzten Pulverlacke werden fast ausschließlich thermisch gestartete Reaktionen der polymeren Lackbindemittel mit sich selbst oder einem zugesetzten Vernetzer benutzt. Als Beispiele solcher thermisch aktivierter Vernetzungsreaktionen seien genannt die Reaktion von einpolymerisierten Epoxydgruppen mit festen Dicarbonsäureanhydriden wie Phthalsäureanhydrid (vgl. z.B. US-A-3 919 347) oder von einpolymerisierten Hydroxylgruppen mit blockierten Isocyanaten.

Ein Hauptproblem der Pulverlacke ist ihr, im Vergleich zu Flüssigsystemen, schlechter Verlauf. Dieser schlechtere Verlauf wird dadurch verursacht, daß es bei thermisch aktivierten Systemen nicht möglich ist, den Aufschmelzvorgang scharf von der Vernetzungsreaktion zu trennen; schon beim Aufschmelzen setzt auch eine Vernetzungsreaktion ein, die zur Viskositätserhöhung führt, so daß eine für optimalen Verlauf wünschenswerte niedrige Viskosität nicht erreicht wird. Dieses Problem kann nicht durch die Verwendung von Polymeren mit niedrigem Schmelzpunkt gelöst werden, weil aus solchen Polymeren hergestellte Pulverlacke bei der Lagerung zusammenbacken, d.h. sie haben keine ausreichende Blockfestigkeit.

Es gab deshalb schon Versuche, den Schmelzvorgang von der Vernetzungsreaktion zu trennen, d.h. eine nicht thermisch aktivierte Reaktion für den Vernetzungsvorgang zu verwenden. Dafür wurden Bindemittel mit im wesentlichen acrylischen Doppelbindungen in Kombination mit Photoinitiatoren vorgeschlagen. Diese Mischungen sollten zunächst bei ausreichend hoher Temperatur aufgeschmolzen und dann durch Bestrahlung mit UV-Licht vernetzt werden.

Auch auf diesem Wege gelingt es jedoch nicht in ausreichendem Maße die thermische Vernetzung vom Aufschmelzprozeß zu trennen, weil die acrylischen Doppelbindungen auch thermisch polymerisieren können. Weitere Probleme ergeben sich aus der thermisch startbaren Polymerisation der Doppelbindungen bei der Herstellung der Pulver, bei der in der Regel Schmelzprozesse notwendig sind.

Aus den europäischen Patentanmeldungen EP-A-346 734, EP-A-367 054, EP-A-377 199, EP-A-395 990, EP-A-417 564, EP-A-448 741, EP-A-458 164 und EP-A-486 897 sind spezielle aromatische Ketone bekannt, die sich zur Herstellung von UV-vernetzbaren Klebstoffen, besonders Haftklebstoffen eignen. Eine Verwendung des Prinzips zur Trennung von Schmelz- und Vernetzungsprozeß bei Pulverlacken ist diesen Schriften nicht zu entnehmen.

In der DE-A-24 36 186 wird die Herstellung von UV-vernetzbaren Pulverlacken aus Polymeren mit 0,5 bis 3,5 polymerisierbaren C-C-Doppelbindungen pro 1000 Molgewicht beschrieben. Diese Polymeren werden in Pulver überführt, mit ggf. 0,1 % bis 0,5 % Photoinitiatoren gemischt auf die zu lackierenden Substrate aufgebracht, geschmolzen und dann durch Einwirkung von ionisierender oder UV-Strahlung vernetzt.

Wasserstoffabstraktion als Vernetzungsprinzip wird hier jedoch nicht erwähnt.

Die US-A 3 926 639 bezieht sich auf polymere Verbindungen, abgeleitet von Benzophenoncarbonsäuren, als Stoffe mit eingebauten Photoinitiatoren. Diese sind, wenn sie Doppelbindungen enthalten, autophotopolymerisierbar oder können auch als polymere Photoinitiatoren mit z.B. acrylisch ungesättigten Stoffen wie Pentaerythrittriacrylat verwendet werden. Wasserstoffabstraktion als Vernetzungsprinzip und Pulverlacke werden hier jedoch nicht erwähnt.

Die US-A-4 129 488 und US-A-4 163 810 beziehen sich auf UV-vernetzbare Pulverlacke auf Basis von ethylenisch ungesättigten Polymeren, bei denen ggf. auch chemisch an die Polymeren gebundene Photoinitiatoren enthalten sein können, wobei die Polymeren nach einem speziellen Blockschema aufgebaut sind. Auch hierin wird Wasserstoffabstraktion als Vernetzungsprinzip für im wesentlichen doppelbindungsfreie Lacke nicht erwähnt.

In der EP-A-226 549 werden photostrukturierte Leiterplatten die in einem speziellen Verfahren unter Verwendung bekannter UV-vernetzbarer Lacke hergestellt werden, beschrieben. Als UV-vernetzbare Polymere werden zwei Klassen genannt: Epoxydharze, die mit UV-aktivierbaren Initiatoren kationisch polymerisiert werden und ethylenisch, bevorzugt acrylisch ungesättigte Polymere die mit den für solche Systeme bekannten UV-Initiatoren polymerisiert werden. Auch hierin werden weder Wasserstoffabstraktion als Vernetzungsprinzip noch auf diesem Vernetzungsprinzip beruhende Pulverlacke erwähnt.

Die vorliegende Erfindung löst die oben angeführten Probleme der bekannten UV-härtenden Pulverlakke durch die Anwendung eines Vernetzungsprinzips, das thermisch nicht aktivierbar ist und auf der wasserstoffabstrahierenden Wirkung von photochemisch angeregten Benzophenonabkömmlingen beruht.

Dieses Prinzip bei UV-vernetzbaren Pulverlacken zur strikten Trennung des Aufschmelzvorganges von der Vernetzungsreaktion zu verwenden, ist neu und führt zu überraschenden technischen Vorteilen.

Gegenstand der vorliegenden Erfindung ist ein Verfahren zur Lackierung von Gegenständen mit Polymerisate enthaltenden Pulverlacken, die auf die Oberfläche des zu lackierenden Substrates aufgebracht, aufgeschmolzen und durch UV-Strahlung vernetzt werden, das dadurch gekennzeichnet ist, daß als Polymerisate Copolymerisate aus

(a) mindestens einem Monomeren der allgemeinen Formel (I)

$CH_2 = C(R^1)\text{-CO-OR}^2$ (I)

mit $R^1$ = H oder $CH_3$ und

$R^2$ = H, $C_nH_{2n+1}$ mit n = 1 bis 30, ein alicyclischer, araliphatischer oder heterocyclischer Rest, ein Hydroxyalkyl-, Alkoxyalkyl-, Glycidyl- oder Aminoalkylrest,

oder der allgemeinen Formel (II)

$CH_2 = C(R^1)\text{-CO-NR}^3R^4$ (II)

mit $R^1$ = H oder $CH_3$ und

wobei $R^3$ und $R^4$ untereinander gleich oder verschieden sein können und für H, $CH_2OH$, $C_nH_{2n+1}$ mit n = 1 bis 30 oder $CH_2OR^5$ mit $R^5$ = $C_mH_{2m+1}$ mit m = 1 bis 12 stehen,

(b) mindestens einer von (a) verschiedenen copolymerisierbaren ethylenisch ungesättigten organischen Verbindung

sowie

(c) mindestens einem copolymerisierbaren ethylenisch ungesättigten, im triplettangeregten Zustand zur Wasserstoffabstraktion befähigten aromatischen oder teilaromatischen Keton

eingesetzt werden.

Bevorzugt sind dabei Copolymerisate die Glastemperaturen zwischen -10 °C und 140 °C aufweisen.

Bevorzugt für das erfindungsgemäße Verfahren sind insbesondere Copolymerisate, die als Komponente (a) Acryl- oder Methacrylsäurealkylester mit 1 bis 10 Kohlenstoffatomen im Alkylrest oder deren Gemische mit Glycidyl(meth)acrylat und/oder (Meth)acrylsäure, sowie solche, die als Komponente (b) Styrol, 4-tert.-Butylstyrol und/oder 1-Methylstyrol einpolymerisiert enthalten.

Komponente (c) ist vorzugsweise in einer Menge von 10 bis 50 Gew.-%, bezogen auf die Gesamtmenge der Komponenten (a), (b) und (c), einpolymerisiert. Eine bevorzugte Ausführungsform des erfindungsgemäßen Verfahrens besteht auch darin, daß die Copolymerisate nach der Methode der Dünnschichtpolymerisation in Substanz oder in Gegenwart von Lösungsmitteln und Entfernung des Lösungsmittels nach üblichen Methoden hergestellt worden sind.

Die Copolymerisate können in Gegenwart von Lösungsmittel und radikalliefernden Polymerisationsinitiatoren hergestellt und das Lösungsmittel nach üblichen Methoden entfernt werden.

Die erfindungsgemäß einzusetzenden Pulverlacke können durch elektrostatisches Versprühen, Wirbelsintern oder nach einer anderen für die Verarbeitung von Pulverlacken üblichen Methode auf die Oberfläche des zu lackierenden Substrates aufgebracht, dort durch Erwärmen aufgeschmolzen und nach Ausbildung eines glatt verlaufenen noch flüssigen Überzugs durch UV-Strahlung vernetzt werden. Weiter kann die UV-Bestrahlung auch nach teilweisem oder vollständigem Abkühlen der vorher aufgeschmolzenen Überzüge erfolgen.

Die Copolymerisate können vor ihrer Weiterverarbeitung zu Pulverlacken auch noch mit festen ethylenisch ungesättigten monomeren, oligomeren oder polymeren Stoffen in einem Mischungsverhältnis von 90 : 10 bis 10 : 90 abgemischt werden.

Die Copolymerisate können auch Doppelbindungen enthalten oder neben den einpolymerisierten intrinsischen UV-Photoinitiatoren (c) zusätzlich weitere übliche UV-Photoinitiatoren sowie gegebenenfalls zusätzlich übliche UV-Stabilisatoren enthalten.

Zu den Aufbaukomponenten der für das erfindungsgemäß Verfahren einzusetzenden Copolymerisate ist im einzelnen folgendes auszuführen.

Die erfindungsgemäß zu verwendenden Copolymerisate enthalten als Komponente

(a) mindestens ein Monomer der allgemeinen Formel (I)

$CH_2 = C(R^1)\text{-}CO\text{-}OR^2$ (I)

mit $R^1$ = H oder $CH_3$ und

$R^2$ = H, $C_nH_{2n+1}$ mit n = 1 bis 30, ein alicyclischer, aromatischer, araliphatischer oder heterocyclischer Rest, ein Hydroxyalkyl-, Alkoxyalkyl-, Glycidyl- oder Aminoalkylrest

oder der allgemeinen Formel (II)

$CH_2 = C(R^1)\text{-}CO\text{-}NR^3R^4$ (II)

mit $R^1$ = H oder $CH_3$ und

wobei $R^3$ und $R^4$ untereinander gleich oder verschieden sein können und für H, $CH_2OH$, $C_nH_{2n+1}$ mit n = 1 bis 30 oder $CH_2OR^5$ mit $R^5$ = $C_mH_{2m+1}$ mit m = 1 bis 12 stehen,

als Komponente

(b) mindestens eine von (a) verschiedene copolymerisierbare ethylenisch ungesättigte organische Verbindung

sowie als Komponente

(c) mindestens ein copolymerisierbares ethylenisch ungesättigtes, im triplettangeregten Zustand zur Wasserstoffabstraktion befähigtes aromatischen oder teilaromatisches Keton

einpolymerisiert.

Als Komponente (a) sind beispielsweise geeignet die Ester der Acrylsäure und Methacrylsäure mit aliphatischen, cykloaliphatischen, araliphatischen und aromatischen Alkoholen mit 1 bis 20 Kohlenstoffatomen, z.B. Methyl-(meth-)acrylat, Ethyl-(meth-)acrylat, Propyl-(meth)acrylat, Isopropyl(meth-)acrylat, n-Butyl-(meth)acrylat, Isobutyl-(meth-)acrylat, tert.-Butyl-(meth-)acrylat, Amyl-(meth-)acrylat, Isoamyl-(meth-)acrylat, Hexyl-(meth-)acrylat, 2-Ethylhexyl-(meth-)acrylat, Decyl-(meth-)acrylat, Undecyl-(meth-)acrylat, Dodecyl-(meth-)acrylat, Tridecyl-(meth-)acrylat, Cyclohexyl-(meth-)acrylat, Methylcyclohexyl-(meth-)acrylat, Benzyl-(meth-)acrylat, Tetrahydrofurfuryl-(meth-)acrylat, Furfuryl-(meth-)acrylat und die Ester der 3-Phenylacrylsäure und deren verschiedenen Isomerieformen, z.B. Methylcinnamat, Ethylcinnamat, Butylcinnamat, Benzylcinnamat, Cyclohexylcinnamat, Isoamylcinnamat, Tetrahydrofurfurylcinnamat, Furfurylcinnamat weiter Acrylamid, Methacrylamid, Methylolacrylamid, Methylolmethacrylamid, Acrylsäure, Methacrylsäure, 3-Phenylacrylsäure, Hydroxyalkyl-(meth-)acrylate, wie Ethylglykolmono-(meth-)acrylat, Butylglykolmono-(meth-)acrylat, Hexandiolmono-(meth-)acrylat, Glycolether-(meth-)acrylate wie Methoxyethylglykolmono(meth-)acrylat, Ethyloxyethylglykolmono-(meth-)acrylat, Butyloxyethylglykolmono-(meth-)acrylat, Phenyloxyethylglykolmono-(meth-)acrylat, Glycidylacrylat, Glycidylmethacrylat, Amino-(meth-)acrylate wie 2-Aminoethyl-(meth-)acrylat.

Monomere (a), die außer der Doppelbindung noch weitere funktionelle Gruppen tragen, können für eine zusätzliche thermisch aktivierbare Vernetzungsreaktion verwendet werden und sind dann in Anteilen von 10 bis 40 % der Monomeren (a) vorhanden. In der Regel werden sie aber in untergeordneten Mengen eingesetzt und verbessern dann z.B. die Haftung, die elektrostatische Aufladbarkeit, das Fließverhalten der Pulver und die Oberflächenglätte. Abkömmlinge der 3-Phenylacrylsäure verbessern weiter als eingebaute Stabilisatoren die Witterungsbeständigkeit der Lackierungen.

Komponente (a) ist im erfindungsgemäß einzusetzenden Copolymerisat im allgemeinen in Mengen von 20 bis 80, vorzugsweise 40 bis 60 Gew.-%, bezogen auf die Gesamtmenge der Komponenten (a) + (b) + (c) einpolymerisiert.

Als Komponente (b) beispielsweise geeignet sind radikalisch polymerisierbare, besonders radikalisch mit Komponente (a) copolymerisierbare Monomere, wie Styrol, 1-Methylstyrol, 4-tert.Butylstyrol, 2-Chlorstyrol, Vinylester von Fettsäuren mit 2 bis 20 Kohlenstoffatomen, wie Vinylacetat, Vinylpropionat, Vinylether von Alkanolen mit 2 bis 20 Kohlenstoffatomen, wie Vinylisobutylether, weiter Vinylchlorid, Vinylidenchlorid, Vinylalkylketone, Diene wie Butadien und Isopren sowie Ester der Malein- und Crotonsäure. Geeignete Monomere (b) sind auch cyclische Vinylverbindungen wie Vinylpyridin und Vinylpyrrolidon. Auch allylisch ungesättigte Monomere können eingesetzt werden, wie z.B. Allylalkohol, Allylalkylester, Monoallylphthalat und Allylphthalat. Weiter kommen auch Acrolein und Methacrolein und polymerisierbare Isocyanate in Frage.

Die Komponente (b) ist im erfindungsgemäß einzusetzenden Copolymerisat im allgemeinen in Mengen von 5 bis 40, vorzugsweise 20 bis 40 Gew.-%, bezogen auf die Gesamtmenge der Komponenten (a) + (b) + (c) einpolymerisiert. Von besonderer Bedeutung sind Komponenten (Monomere) (a) oder auch (b), die

besonders leicht abstrahierbare Wasserstoffatome tragen; das sind besonders Monomere, die Isoalkyl-, Cycloisoalkyl-, Cycloalkyl-, Furfuryl- und Tetrahydrofurfurylreste enthalten. Mit solchen Monomeren kann die Lichtempfindlichkeit der erfindungsgemäßen Lacke erhöht werden.

Bei Komponente (c) handelt es sich um copolymerisierbare, ethylenisch ungesättigte, im triplettangeregten Zustand zur Wasserstoffabstraktion befähigte aromatische oder teilaromatische Ketone. Besonders geeignet sind Stoffe mit folgenden Strukturformeln:

(III)

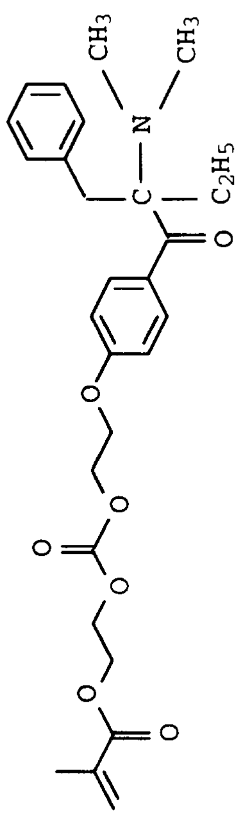

(IV)

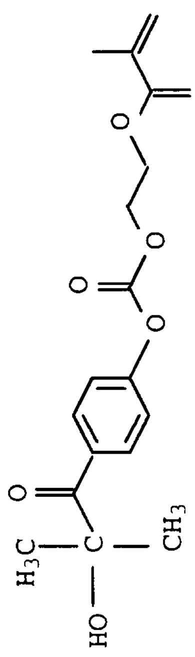

(V)

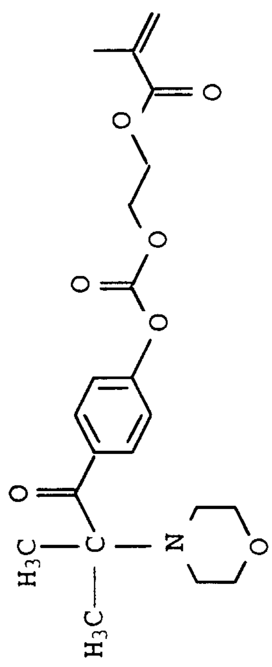

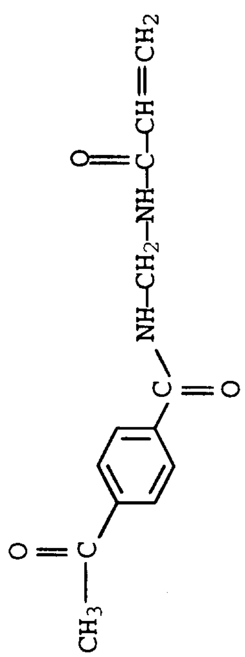

(VI)

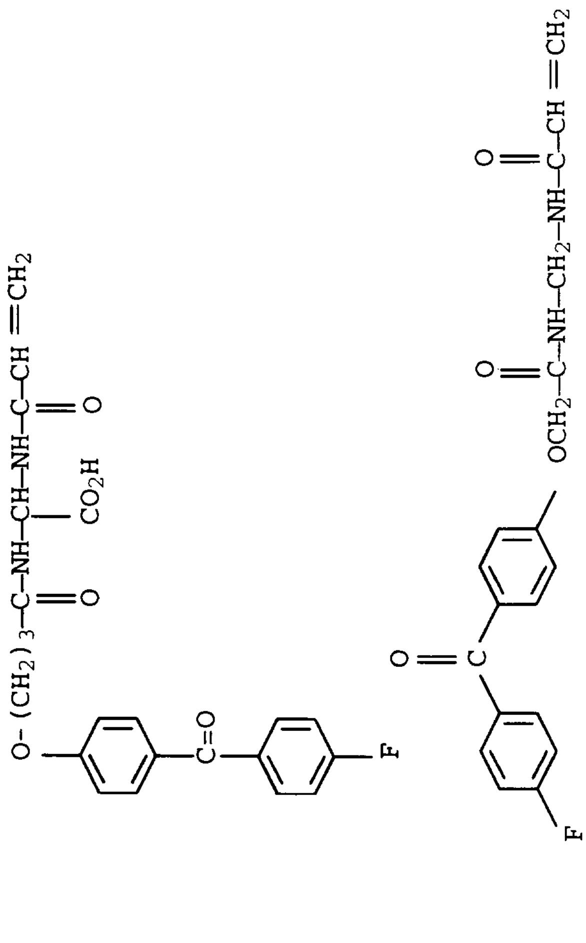

(VII)

(VIII)

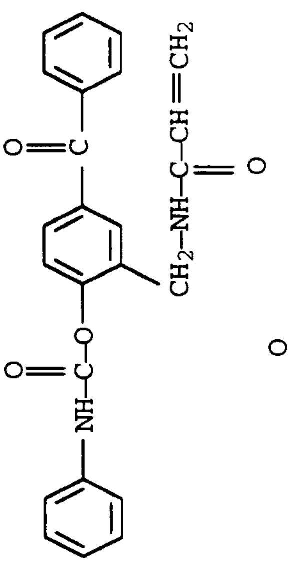

(IX)

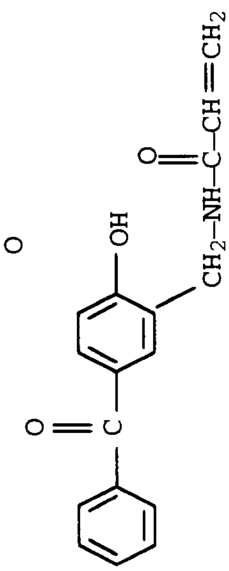

(X)

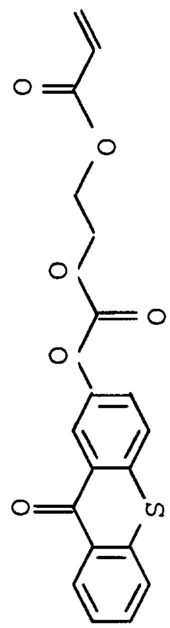

(XI)

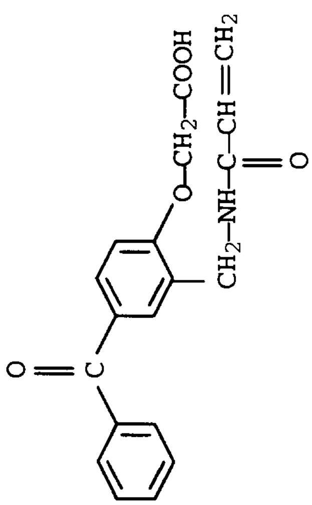

(XII)

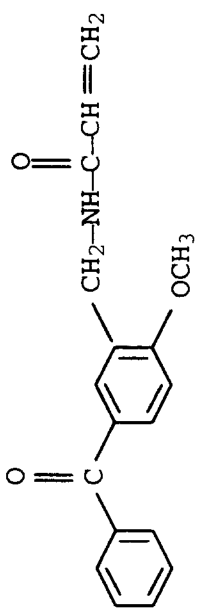

(XIII)

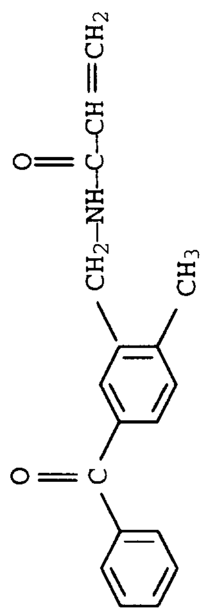

(XIV)

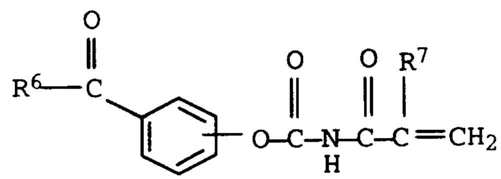

(XV)

in der
$R^6$ $-CH_3$ oder $-C_6H_5$ und
$R^7$ -H oder $-CH_3$ bedeuten,

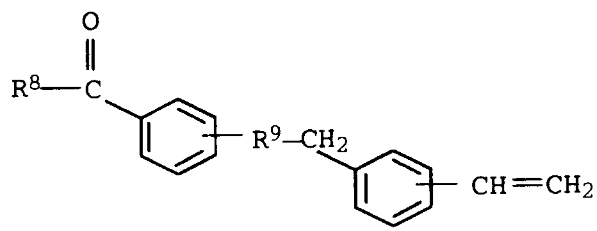

(XVI)

in der
$R^8$ $-C_nH_{2n+1}$ mit n=1 bis 3 oder - $C_6H_5$

$R^9$ 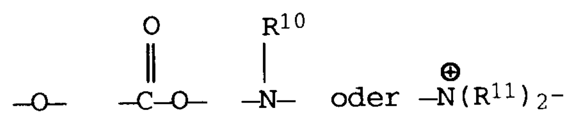 oder

$R^{10}$ –H oder $-C_nH_{2n+1}$ mit n = 1 bis 8 und

$R^{11}$ $-C_nH_{2n+1}$ mit n = 1 bis 4 bedeuten

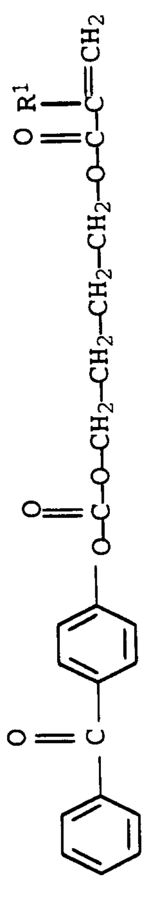

(XVII)

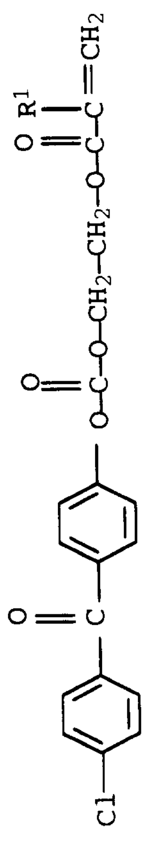

(XVIII)

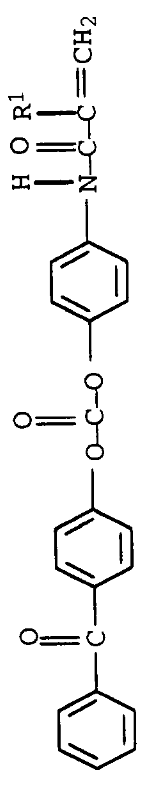

(XIX)

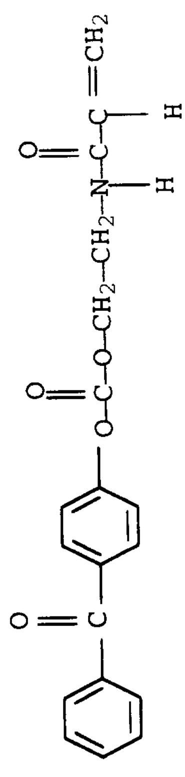

(XX)

(XXI)

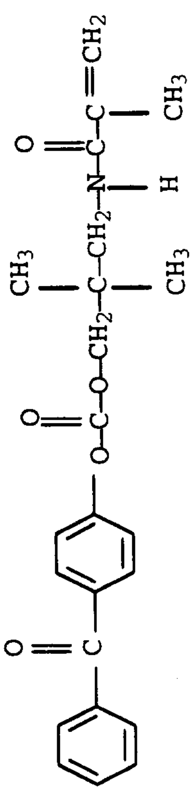

(XXII)

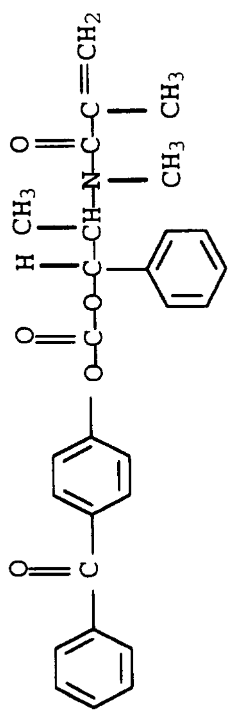

(XXIII)

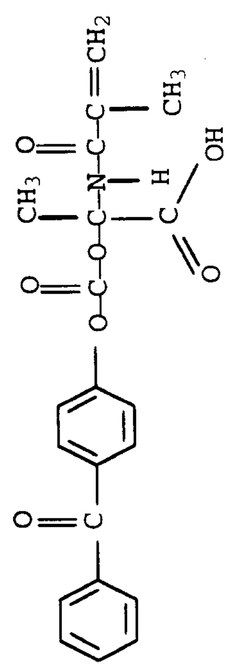

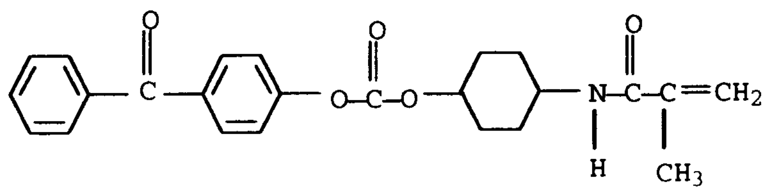

(XXIV)

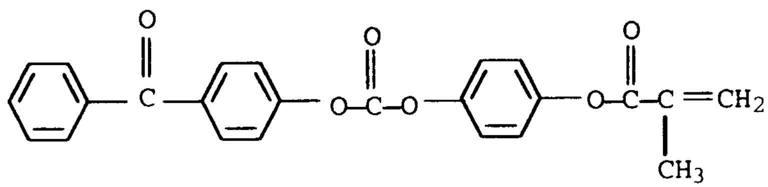

(XXV)

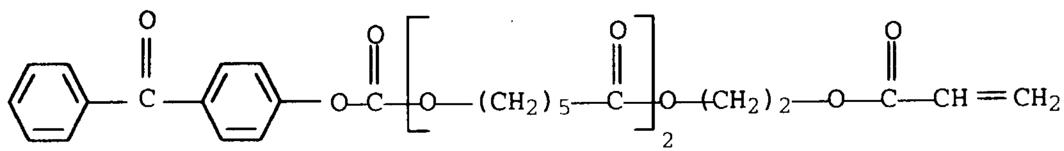

(XXVI)

(XXVII)

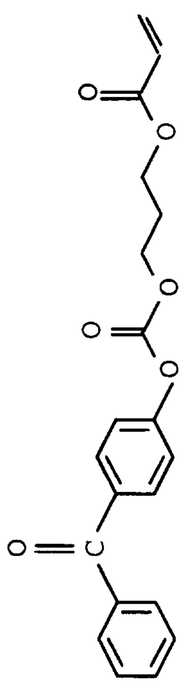

(XXVIII)

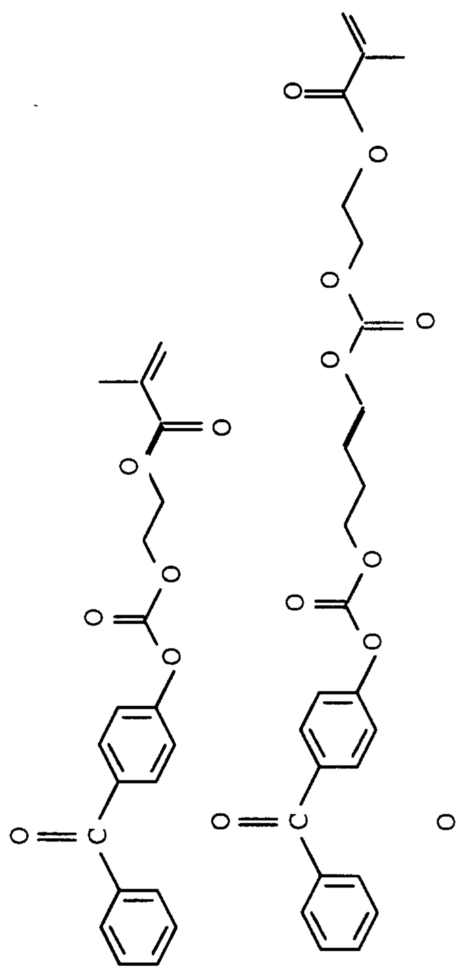

(XXIX)

(XXX)

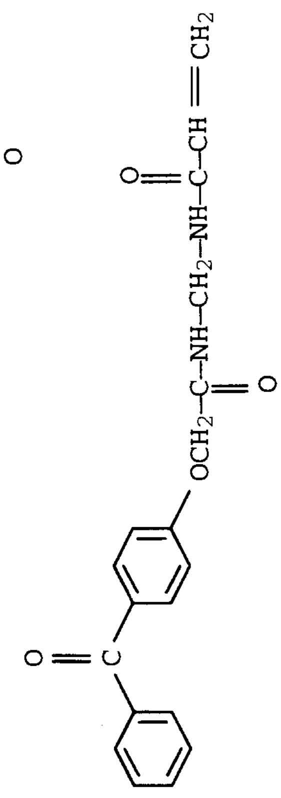

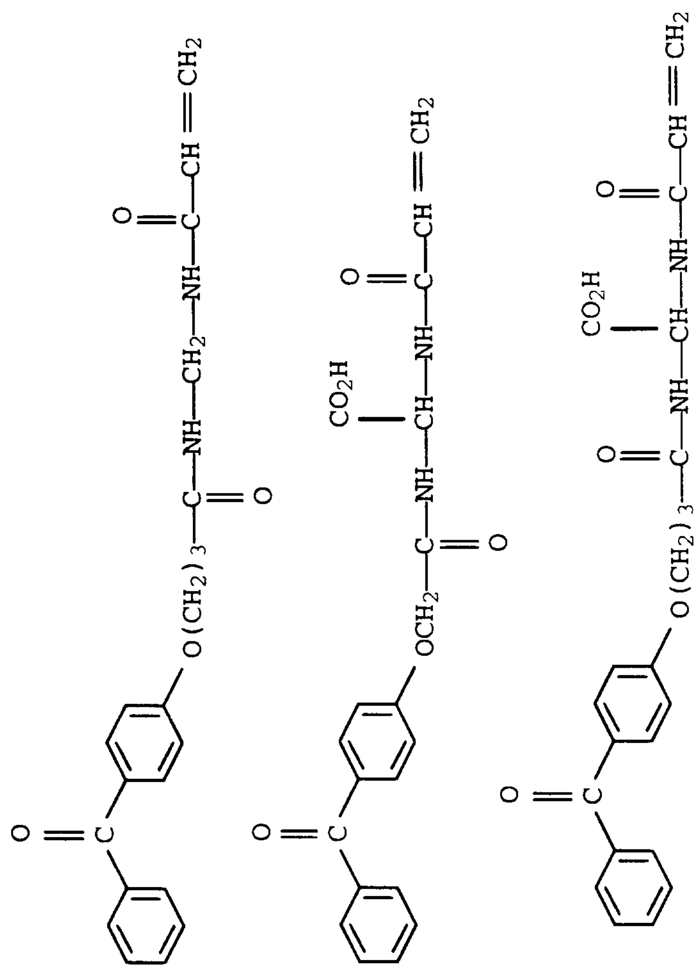

(XXXI)

(XXXII)

(XXXIII)

(XXXIV)

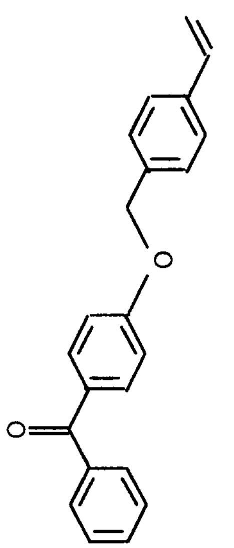

(XXXV)

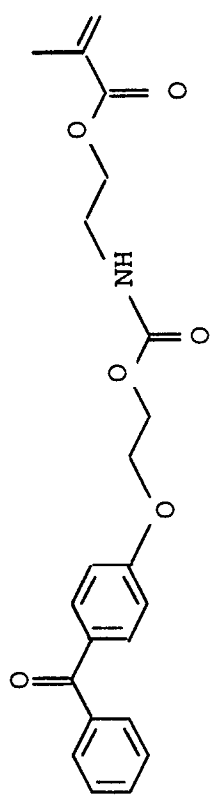

(XXXVI)

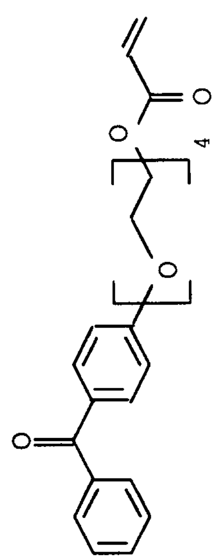

(XXXVII)

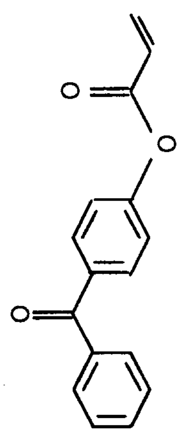

(XXXVIII)

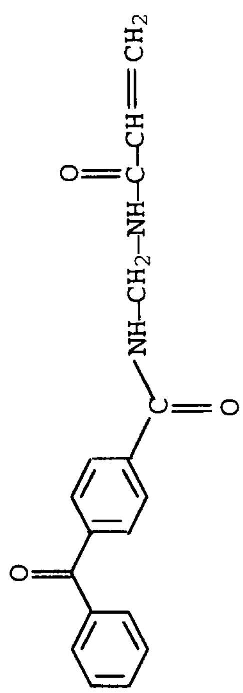

(XXXIX)

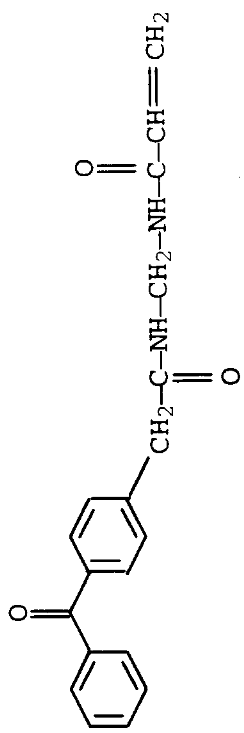

(XL)

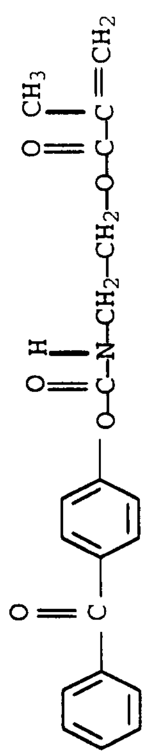

(XLI)

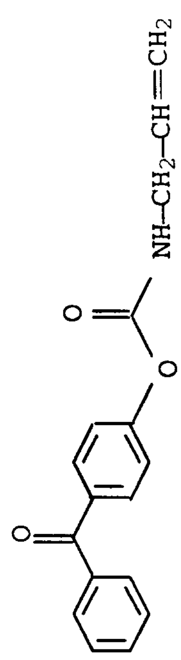

(XLII)

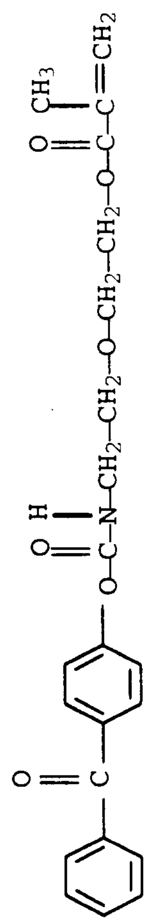

(XLIII)

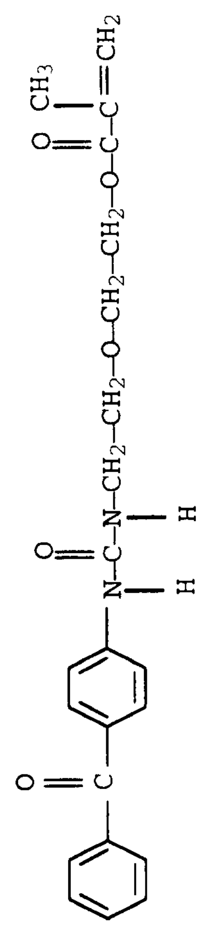

Bevorzugt sind solche Komponenten (c), die sich vom Benzophenon ableiten, insbesondere solche, bei denen die ethylenisch ungesättigte Gruppe von der Benzophenongruppe durch einen molekularen Spacer nach dem Schema

Ketongruppe .... Spacer ... ... ethylenisch ungesättigte Gruppe getrennt sind.

Solche besonders bevorzugten Komponenten (c) sind z.B. durch die oben angeführten Strukturformeln (VIII), (XVII), (XX), (XXI), (XXII), (XXIII), (XXIV), (XXV), (XXVI), (XXVII), (XXVIII), (XXXIX), (XL), (XLII) und (XLIII) wiedergegeben.

Komponente (c) ist im erfindungsgemäß zu verwendenden Copolymerisat in Mengen von 10 bis 50, vorzugsweise 20 bis 40 Gew.-%, bezogen auf die Gesamtmenge der Komponenten (a) + (b) + (c) einpolymerisiert.

Die Auswahl der zu kombinierenden Monomeren (a) bis (c) erfolgt zweckmäßigerweise so, daß die Pulverlacke gut lagerstabil, d.h. vor allem blockfest und applizierfähig, d.h. gut elektrostatisch versprühbar werden und die durch UV-Licht ausgehärteten Lacke den gestellten Anforderungen genügen. Diese Anforderungen können recht unterschiedlich sein, so werden z.B. für klare Decklacke von Metallic-Lackierungen bei Automobilen höchste Vergilbungs- und Witterungsbeständigkeit, Kratzfestigkeit und Glanzhaltung bei hoher Härte gefordert. Bei einem coilcoat-Lack, d.h. einem Lack mit dem Blechbahnen lackiert, dann aufgewickelt und später unter Verformung weiterverarbeitet werden, kommt es auf höchste Elastizität und Haftung an. Auch der Preis der Monomeren kann ein Auswahlkriterium sein, wenn für bestimmte Anwendungen keine hohe Qualität der Lackierungen, dafür aber ein niedriger Preis gefordert wird.

Es ist z.B. bekannt, daß Styrol und Methylmethacrylat "harte" Monomere sind, die die Glasübergangstemperatur und den Erweichungspunkt der Polymeren und die Härte der Lackierungen erhöhen, während Butylacrylat, Ethylhexylacrylat und Tridecylacrylat als "weiche" Monomere diese Eigenschaften erniedrigen, dafür aber die Elastizität verbessern. Weiter ist auch bekannt, daß untergeordnete Anteile an (Meth-)Acrylsäure oder (Meth-)Acrylamid die Haftung verbessern.

Diese Grundprinzipien bei der Auswahl und Mischung von Monomeren zur Einstellung von Basiseigenschaften bei Lacken, sind dem Polymerchemiker und Lackfachmann bekannt.

Der Anteil an Komponente (c) wird aus Kostengründen so gering wie möglich gehalten; da sie aber unmittelbar die Vernetzungsdichte beeinflußt ist es zweckmäßig, den dem vorgesehenen Verwendungszweck angepaßten optimalen Anteil durch Versuche zu ermitteln.

Weitere Bestandteile der Monomermischungen können darauf zielen, neben der Vernetzung durch Wasserstoffabstraktion über die Monomeren (c) auch die UV-Vernetzung von Doppelbindungen als Co-Vernetzer mitzuverwenden. Die dazu notwendigen Doppelbindungen können z.B. dadurch in die Polymeren eingeführt werden, daß einpolymerisierte (Meth-)Acrylsäure mit Glycidylmethacrylat oder einpolymerisiertes Glycidylmethacrylat mit (Meth-)Acrylsäure umgesetzt wird, oder bevorzugt einpolymerisierte Hydroxyalkyl(meth)acrylate mit Acrylsäureanhydrid oder Methacrylsäureanhydrid umgesetzt werden.

Die Herstellung der Polymerisate kann auf bekannte Weise durch thermisch und/oder mit radikalbildenden Initiatoren gestartete radikalische Polymerisation in Lösung oder in Substanz erfolgen.

Gut geeignet ist vor allem die Substanzpolymerisation bei hoher Temperatur in kontinuierlichen Reaktoren, weil sie ein niedriges Molekulargewicht und eine enge Molekulargewichtsverteilung erzeugt. Auch die Notwendigkeit der Entfernung eines Hilfslösemittels entfällt dabei. Weiter ist es möglich, in die Austragsvorrichtung des Reaktors oder einen unmittelbar dahintergeschalteten Extruder Hilfsstoffe, Pigmente und andere Stoffe zur Komplettierung gebrauchsfertiger Pulverlacke einzuarbeiten und so in einem Prozeß gebrauchsfertige Pulverlacke zu erzeugen.

Die Polymerisationstechnik ist nicht Gegenstand der vorliegenden Erfindung.

Für optimale Filmbildung aus den Pulvern bei relativ niedrigen Temperaturen ist es erwünscht, Polymere mit relativ niedrigem Molekulargewicht und mit einer schmalen Molekulargewichtsverteilung zu verwenden.

Gut geeignet, unter den Aspekt einer optimalen Filmoberfläche, sind Polymere mit einem zahlenmittleren Molekulargewicht $\overline{M}_n$ zwischen 1000 und 20000, bevorzugt zwischen 1500 und 8000, insbesondere zwischen 1500 und 6000.

Ein weiterer Aspekt ist die Molekulargewichtsverteilung, d.h. der Quotient aus zahlenmittlerem ($\overline{M}_n$) und dem gewichtsmittleren ($\overline{M}_g$) Molekulargewicht, der für besten Verlauf unter 4 betragen sollte.

Um speziellen anwendungstechnischen Aspekten Rechnung zu tragen, z.B. hohe Standfestigkeit an senkrechten Flächen einzustellen, kann aber auch beliebig davon abgewichen werden.

Die Herstellung von Lackpulvern aus den erfindungsgemäßen Polymerisaten kann nach dem bekannten Stand der Technik, wie er z.B. "Powder Coatings", Chemistry and Technology Toskn Aleksandar Misev, Verlag John Wiley and Sons, Chichester (1991) zu entnehmen ist, erfolgen.

Weiter können auch Bestandteile der Monomermischungen enthalten sein, die darauf gerichtet sind, neben der Vernetzung durch UV-Licht eine thermisch gestartete Co-Vernetzung zu ermöglichen. Dazu geeignet sind z.B. Glycidylmethacrylat, das mit Fremdvernetzern wie polyfunktionellen Carbonsäuren oder Carbonsäureanhydriden reagieren kann oder freie Carboxylgruppen aus einpolymerisierter (Meth)-acrylsäure, die mit Polyepoxydharzen vernetzt werden können. Auch einpolymerisierte Methylolierungsprodukte und Methylolether von (Meth-)acrylamid sind zur thermischen Co-Vernetzung geeignet.

Ein weiterer Aspekt der Erfindung kann auch sein, zusätzliche Vernetzungen über einen nicht erfindungsgemäßen, bekannten Mechanismus mitzuverwenden, der unabhängig ist von dem erfindungsgemäßen Mechanismus der direkten Wasserstoffabstraktion. Dazu kommen sowohl lichtaktivierte als auch thermisch aktivierte Mechanismen in Frage. Ziel dabei ist es, sich durchdringende Netzwerke zu erzeugen, die verbesserte Lackeigenschaften aufweisen. Beispielsweise können den erfindungsgemäßen Copolymerisaten auch nicht erfindungsgemäße, doppelbindungstragende Harze zugemischt werden, um so eine Co-Vernetzung über Doppelbindungen zu erreichen. Solche Harze können z.B. nach US-A-4 046 161 oder DE-A-24 36 186 auf der Basis von Polymerisaten, die Glycidylmethacrylat enthalten und mit Acrylsäure umgesetzt werden, erhalten werden. Weiter können den erfindungsgemäßen Lacken nicht erfindungsgemäße Lacke zugemischt werden, die einpolymerisierte Epoxidgruppen tragen und mit Polycarbonsäuren vernetzbar sind.

In der Regel reicht die vernetzende Wirkung der Komponente (c) für eine gute Vernetzung unter UV-Licht aus. Diese Stoffe sind auf Grund ihrer molekularen Struktur befähigt, durch UV-Absorption in einen triplettangeregten Zustand überzugehen und durch Wasserstoffabstraktion eine Vernetzung zu bewirken. Zur Optimierung der UV-Vernetzung und zur Anpassung an das Spektrum der verfügbaren UV-Quelle können aber noch weitere übliche und bekannte UV-Absorber und Photoinitiatoren, wie Benzoinether, Benzophenonverbindungen, Benzoinphosphinoxide und Thioxanthone mitverwendet werden.

Weiterhin können die Pulverlacke übliche Hilfsmittel nach dem Stand der Technik enthalten, wie z.B. Katalysatoren für eine Covernetzung, Verlaufsverbesserer, Antikratermittel, Haftungsverbesserer u.a.

Die in den Beispielen angegebenen Teile und Prozente sind, soweit nicht anders angegeben, Gewichtsteile und Gewichtsprozente.

Beispiel 1

In einem Rührkolben (Fassungsvermögen 2 Liter) mit Zulauftrichter, Thermometer, Rückflußkühler und leichter Stickstoffspülung wurden

400 g Isobutanol vorgelegt und auf Rückfluß erhitzt; unter Rühren wurde dann bei ca. 105-108 °C innerhalb einer Stunde mit gleichbleibender Geschwindigkeit eine Mischung von

570 g Methylmethacrylat
200 g Styrol
50 g 2-Ethylhexylacrylat
30 g Acrylsäure
150 g der Verbindung der Strukturformel (XVII) mit $R^1 = H$ und
30 g tert.-Butylperoctoat zugefahren.

20 Minuten nach Ende der Zugabe wurden weitere

10 g tert.-Butylperoctoat innerhalb von 15 Minuten zugetropft, noch 3 Stunden bei 105 - 108 °C nachpolymerisiert und dann abgekühlt.

Es entstand eine viskose Harzlösung aus der unter leichtem Vakuum der Hauptteil des Lösemittels abdestilliert wurde. Die resultierende Restlösemittel enthaltende Harzschmelze wurde dann in Porzellanschalen, die mit Aluminiumfolie ausgelegt waren, ausgegossen und im Vakuumtrockenschrank bei 80 °C 48 Stunden getrocknet.

Auf den Folien resultierte danach ein spröd-hartes Harz, das durch Klopfen weitgehend von den Folien abgeschlagen und in einer Labormühle mit Messerflügelmahlwerk gemahlen wurde. Die Grobteile wurden mit einem Sieb mit Maschenweite 100 µm entfernt.

Das Harz wurde als 1%ige Lösung in Essigester charakterisiert durch

| | |
|---|---|
| Viskositätszahl: | 15,2 $cm^3/g$ und |
| K-Wert: | 23 (nach Fikentscher) |

Beispiel 2

Es wurde wie bei Beispiel 1 verfahren, als Lösungsmittel wurde Butylacetat verwendet und im 1. Zulauf die Menge tert.-Butylperoctoat auf 10 g verringert, um ein höheres Molekulargewicht zu erreichen.

Das Harz wurde als 1%ige Lösung in Essigester charakterisiert durch

| | |
|---|---|
| Viskositätszahl:<br>K-Wert: | 21,1 $cm^3/g$ und<br>27,7 |

Beispiel 3

Es wurde wie bei Beispiel 1 verfahren, aber mit einer geänderten Monomerzusammensetzung:
520 g Methylmethacrylat
150 g Styrol
50 g 2-Ethylhexylacrylat
30 g Acrylsäure
250 g der Verbindung der Strukturformel (XVII) mit $R^1 = H$.

Das Harz wurde als 1%ige Lösung in Essigester charakterisiert durch

| | |
|---|---|
| Viskositätszahl:<br>K-Wert: | 10,3 $cm^3/g$ und<br>18,2 |

Beispiel 4 (mit thermischer Co-Vernetzung)

Es wurde wie bei Beispiel 1 verfahren, aber mit geänderter Monomerzusammensetzung.
530 g Methylmethacrylat
150 g Styrol
70 g 2-Ethylhexylacrylat
150 g der Verbindung der Strukturformel (XVII) mit $R^1 = H$ und
100 g Glycidylmethacrylat (0,705 Mol)
Eine Harzprobe wurde zur Charakterisierung im Vakuum getrocknet. Das Harz wurde als 1%ige Lösung in Essigester charakterisiert durch

| | |
|---|---|
| Viskositätszahl:<br>K-Wert: | 14,4 $cm^3/g$ und<br>22,3 |

Nach der Polymerisation wurden in der Harzlösung bei Raumtemperatur unter Rühren
51,5 g Adipinsäure (0,36 Mol) gelöst.

Die erhaltene Lösung wurde dann in Porzellanschalen, die mit Aluminiumfolie ausgelegt waren, ausgegossen und im Vakuumtrockenschrank bei 40 °C 24 Stunden und anschließend noch 48 Stunden bei Raumtemperatur getrocknet. Der hart-spröde Rückstand wurde dann von den Aluminiumfolien abgeschlagen und wie in Beispiel 1 beschrieben zu einem Pulver aufgearbeitet. Das Pulver wurde im Vakuumschrank bei Raumtemperatur noch weitere 48 Stunden zur Entfernung des Restlösemittels nachgetrocknet.

Beispiel 5 (mit UV-Co-Vernetzung über zugemischtes Polymer mit acrylischen Doppelbindungen)

Zur Herstellung eines Acrylharzes mit freien acrylischen Doppelbindungen wurde gemäß DE-A-24 36 186 Beispiel 4 verfahren. Dazu wurde gemäß Beispiel 1 der vorliegenden Erfindung, aber mit geänderter Monomerenzusammensetzung ein Copolymerisat hergestellt aus:
530 g Methylmethacrylat
150 g Styrol
70 g 2-Ethylhexylacrylat
250 g Glycidylmethacrylat (1,76 Mol)
Eine Harzprobe wurde zur Charakterisierung im Vakuum getrocknet. Das Harz wurde als 1%ige Lösung in Essigester charakterisiert durch

| | |
|---|---|
| Viskositätszahl: K-Wert: | 20,8 $cm^3/g$ und 26,3 |

Nach der Polymerisation wurden zur Harzlösung bei Raumtemperatur unter Rühren zugegeben
126,7 g Acrylsäure (1,76 Mol)
0,5 g Phenothiazin
1,0 g Dimethylaminopyridin.

Die Acrylsäure wurde bei 80 °C unter Rühren mit dem einpolymerisierten Glycidylmethacrylat zur Reaktion gebracht. Der Umsatz wurde durch titrimetrische Bestimmung der freien Restsäure verfolgt. Nach 4 Stunden war die Säurezahl auf 1,53 abgesunken. Der Ansatz wurde auf Raumtemperatur gekühlt und mit einer gewichtsgleichen Menge eines Polymerisates laut Beispiel 1 in einer dunkelbraunen Flasche auf dem Rollstuhl bei Raumtemperatur gemischt.

Beispiel 5/1 (Co-Vernetzung über Doppelbindungen ohne weiteren Zusatz von Photoinitiator)

Die Hälfte der erhaltenen Polymerisatmischung wurde dann wie in Beispiel 1 beschrieben, zu einem Pulverlack aufgearbeitet, wobei die Handhabung unter einem gegen UV-Licht geschützten Abzug durchgeführt wurde.

Beispiel 5/2 (Co-Vernetzung über Doppelbindungen mit Zusatz eines weiteren eingemischten Photoinitiators)

Die andere Hälfte der erhaltenen Polymerisatmischung wurde mit 3 % 2,4,6-Trimethylbenzoyldiphenylphosphinoxid (Lucirin® TPO der BASF), bezogen auf Festharzgehalt, gemischt und dann zu einem Pulverlack aufgearbeitet wie in Beispiel 1 beschrieben, wobei dies unter einem gegen UV-Licht geschützten Abzug durchgeführt wurde.

Beispiel 6

Durch Polymerisation bei hoher Temperatur im Druckkessel unter Verwendung höhere Mengen an tert.-Butylperoctoat erhaltenes Lackharz, mit niedrigerem Molekulargewicht und engerer Molekulargewichtsverteilung als bei Beispiel 1:
In einem Druckreaktor (Fassungsvermögen 2 Liter) wurden
150 g Isopropanol vorgelegt und auf 180 °C erhitzt, unter Rühren wurde dann bei dieser Temperatur innerhalb einer Stunde mit gleichbleibender Geschwindigkeit eine Mischung von
570 g Methylmethacrylat
200 g Styrol
50 g 2-Ethylhexylacrylat
30 g Acrylsäure
150 g der Verbindung der Strukturformel (XVII) mit $R^1 = H$ und
60 g Di-tert.Butylperoxid
zugegeben.

Das Harz wurde als 1%ige Lösung in Essigester charakterisiert durch

| | |
|---|---|
| Viskositätszahl: K-Wert: | 10,3 $cm^3/g$ und 18,2 |

20 Minuten nach Ende der Zugabe wurde eine Lösung von
10 g Di-tert.-Butylperoctoat in
50 g Isopropanol zugefahren und noch 30 Minuten nachpolymerisiert.

Danach wurde auf 80 °C abgekühlt und das entstandene Polymerisat mit Stickstoffdruck durch das Bodenventil auf Stücke von Aluminiumfolien ausgedrückt. Beim Abkühlen erstarrt die Masse zu einem klebrigem, festem Harz. Die Aluminiumfolie wurde zusammen mit dem Harz in passende Stücke geschnitten und diese in einem Vakuumtrockenschrank 48 Stunden bei 60 °C getrocknet. Danach resultierte ein spröd-hartes Harz, das durch Klopfen weitgehend von den Folien abgeschlagen und in einer Labormühle mit Messerflügelmahlwerk gemahlen wurde. Die Grobteile wurden mit einem Sieb mit Maschenweite 100

µm entfernt.

Das Polymerisat hat eine durch DSC bestimmte Glasübergangstemperatur $T_G$ von 53 °C und einen Erweichungspunkt von 77 °C. Sein zahlenmittleres Molekulargewicht beträgt 3800. Zur weiteren Charakterisierung (gemessen 1%ig in Essigester) wurden

| | |
|---|---|
| Viskositätszahl: | 6,1 $cm^3/g$ und |
| K-Wert: | 13,1 |

bestimmt.

Zur Prüfung wurden diese Pulver mit einer Rakel mit 200 µm Spalthöhe auf ein Prüfblech aufgebracht. Man erhält so eine lockere, gleichmäßige Pulverschicht auf dem Blech. Diese Arbeitsschritte wurden in einem Labor mit normaler Leuchtstoffröhrenbeleuchtung mit Tageslichtanteilen durchgeführt. Die Pulver sind in Isopropanol und Aceton klar löslich und durch das vorhandene Licht nicht vernetzt. Die Blechtafeln wurden dann auf einen Heiztisch gelegt, der auf 140 °C vorgeheizt war. Nach 3 Minuten waren die Pulver zu einer glatten gleichmäßigen Harzschicht zusammengeschmolzen. Mit einem kleinen Spatel waren diese Schmelzen als viskose Flüssigkeiten rührbar. Der Heiztisch wurde dann unter eine dotierten Quecksilbermitteldrucklampe mit einem breitbandigen UV-Licht geschoben. Dabei wurden die Prüfplatten partiell gegen das UV-Licht abgedeckt. Nach 20 Sekunden war im belichteten Bereich bei allen Beispielen das geschmolzene Harz zu einem mit dem Spatel nicht mehr rührbaren Film vernetzt. Im abgedeckten Bereich war die Harzschmelze unverändert eine viskose Flüssigkeit, bis auf Beispiel 4, bei dem der abgedeckte Bereich stark angeliert aber deutlich weniger vernetzt war als der belichtete Bereich.

Nach der Belichtung wurden die Probeplatten vom Heiztisch genommen und abkühlen lassen. Nach dem Abkühlen wurden auf die belichteten und die während der Belichtung abgedeckten Felder der Tafeln für 5 Minuten isopropanolfeuchte Wattebäusche aufgelegt und dabei folgende Ergebnisse erhalten:

| | unbelichteter Bereich | belichteter Bereich |
|---|---|---|
| Beispiel 1 | aufgelöst | geringfügig angequollen |
| Beispiel 2 | aufgelöst | geringfügig angequollen |
| Beispiel 3 | aufgelöst | kein Angriff |
| Beispiel 4 | zu einem dicken Gel aufgequollen | kein Angriff |
| Beispiel 5/1 | aufgelöst | minimal angequollen |
| Beispiel 5/2 | aufgelöst | kein Angriff |
| Beispiel 6 | aufgelöst | geringfügig angequollen |

## Patentansprüche

**1.** Verfahren zur Lackierung von Gegenständen mit Polymerisate enthaltenden Pulverlacken, die auf die Oberfläche des zu lackierenden Substrates aufgebracht, aufgeschmolzen und durch UV-Strahlung vernetzt werden, dadurch gekennzeichnet, daß als Polymerisate Copolymerisate aus

(a) mindestens einem Monomeren der allgemeinen Formel I

$CH_2 = C(R^1)\text{-}CO\text{-}OR^2$ (I)

mit $R^1$ = H oder $CH_3$ und

$R^2$ = H, $C_nH_{2+1}$ mit n = 1 bis 30, ein alicyclischer, araliphatischer oder heterocyclischer Rest, ein Hydroxyalkyl-, Alkoxyalkyl-, Glycidyl- oder Aminoalkylrest,

oder der allgemeinen Formel (II)

$CH_2 = C(R^1)\text{-}CO\text{-}NR^3R^4$ (II)

mit $R^1$ = H oder $CH_3$ und

wobei $R^3$ und $R^4$ untereinander gleich oder verschieden sein können und für H, $CH_2OH$, $C_nH_{2n+1}$ mit n = 1 bis 30 oder $CH_2OR^5$ mit $R^5$ = $C_mH_{2m+1}$ mit m = 1 bis 12 stehen,

(b) mindestens einer von (a) verschiedenen copolymerisierbaren ethylenisch ungesättigten organischen Verbindung

sowie

(c) mindestens einem copolymerisierbaren ethylenisch ungesättigten, im triplettangeregten Zustand zur Wasserstoffabstraktion befähigten aromatischen oder teilaromatischen Keton

eingesetzt werden.

**2.** Verfahren nach Anspruch 1, dadurch gekennzeichnet, daß die Copolymerisate Glastemperaturen zwischen -10 °C und 140 °C aufweisen.

**3.** Verfahren nach einem der vorhergehenden Ansprüche, dadurch gekennzeichnet, daß die Copolymerisate als Komponente (a) Acryl- oder Methacrylsäurealkylester mit 1 bis 10 Kohlenstoffatomen im Alkylrest oder deren Gemische mit Glycidyl(meth)acrylat und/oder (Meth)acrylsäure einpolymerisiert enthalten.

**4.** Verfahren nach einem der vorhergehenden Ansprüche, dadurch gekennzeichnet, daß in den Copolymerisaten als Komponente (b) Styrol, 4-tert.-Butylstyrol und/oder 1-Methylstyrol einpolymerisiert sind.

**5.** Verfahren nach einem der vorhergehenden Ansprüche, dadurch gekennzeichnet, daß in den Copolymerisaten Komponente (c) in einer Menge von 10 bis 50 Gew.-%, bezogen auf die Gesamtmenge der Komponenten (a), (b) und (c), einpolymerisiert ist.

**6.** Verfahren nach einem der vorhergehenden Ansprüche, dadurch gekennzeichnet, daß die Copolymerisate nach der Methode der Dünnschichtpolymerisation in Substanz oder in Gegenwart von Lösungsmitteln und Entfernung des Lösungsmittels nach üblichen Methoden hergestellt worden sind.

**7.** Verfahren nach einem der vorhergehenden Ansprüche, dadurch gekennzeichnet, daß die Copolymerisate in Gegenwart von Lösungsmitteln und radikalliefernden Polymerisationsinitiatoren hergestellt und das Lösungsmittel nach üblichen Methoden entfernt worden ist.

**8.** Verfahren nach einem der vorhergehenden Ansprüche, dadurch gekennzeichnet, daß die Copolymerisate als Komponente (c) mindestens ein copolymerisierbares ethylenisch ungesättigtes im triplettangeregten Zustand zur Wasserstoffabstraktion befähigtes aromatisches oder teilaromatisches Keton einer der Formel (III) bis (XLIII) einpolymerisiert enthalten:

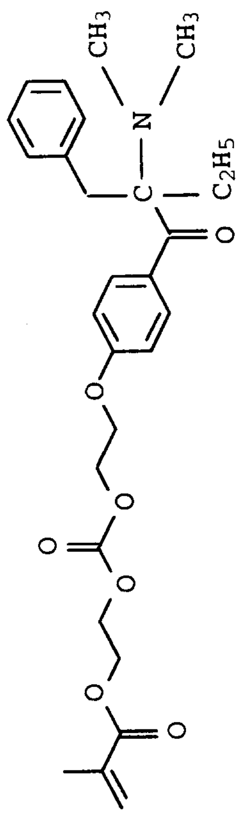

(III)

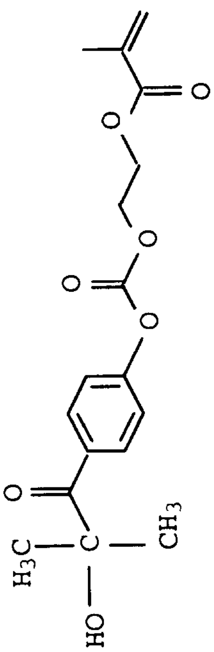

(IV)

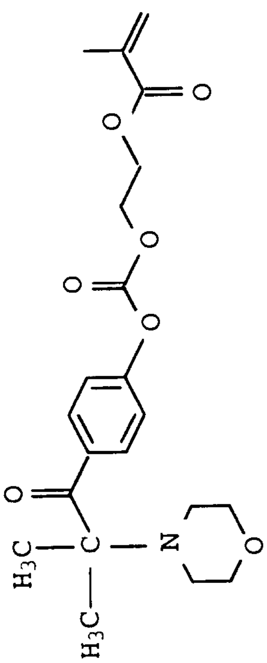

(V)

(VI)

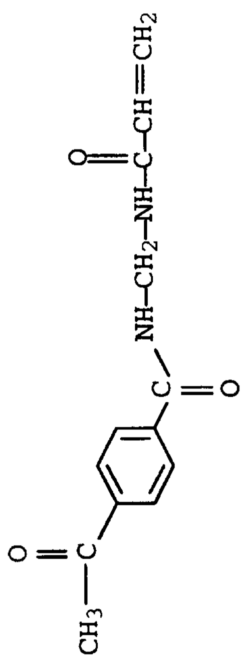

(VII)

(VIII)

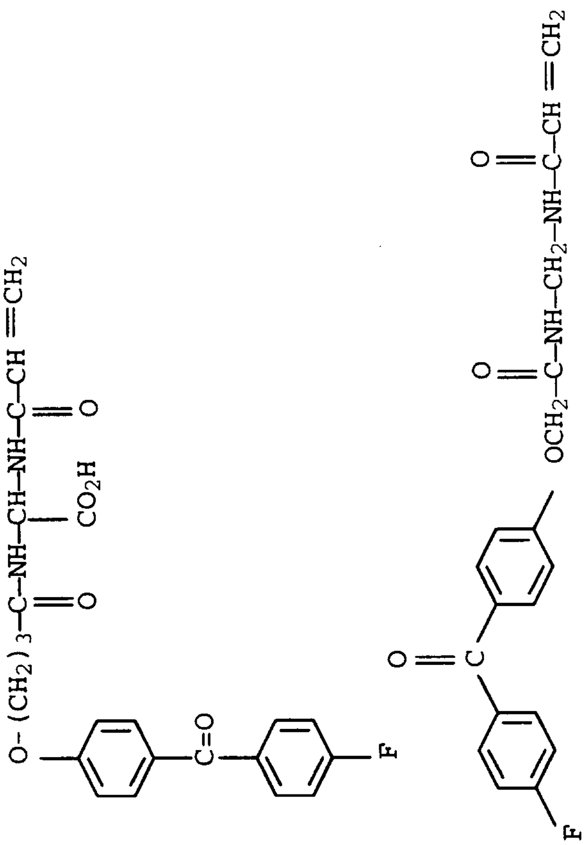

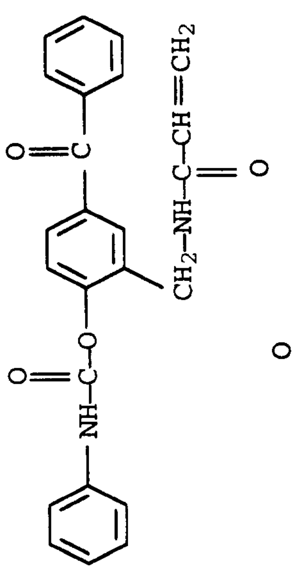

(IX)

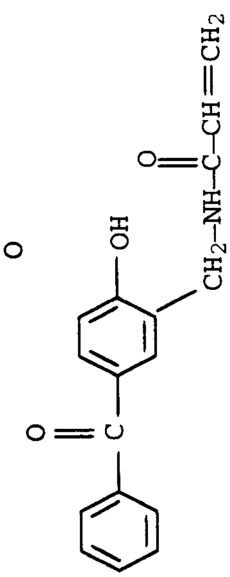

(X)

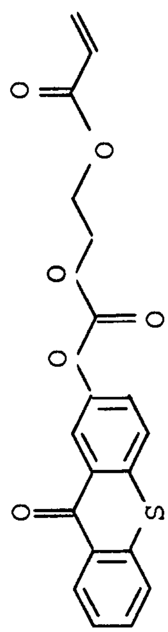

(XI)

(XII)

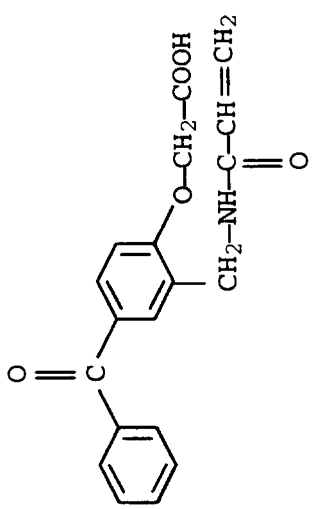

(XIII)

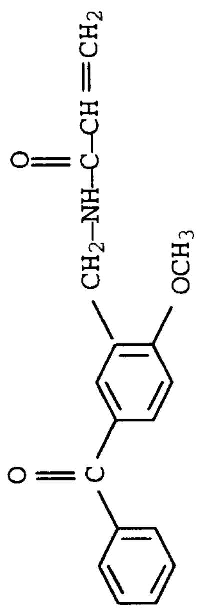

(XIV)

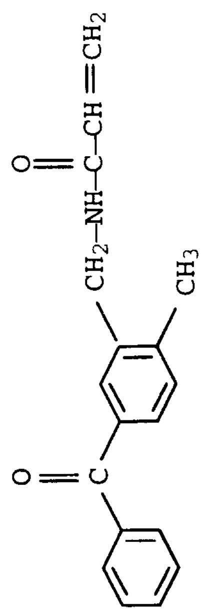

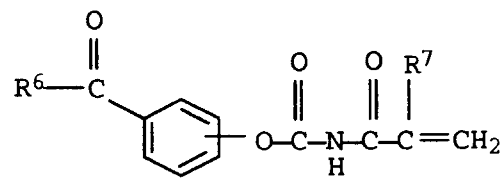

(XV)

in der
$R^6$ $-CH_3$ oder $-C_6H_5$ und
$R^7$ $-H$ oder $-CH_3$ bedeuten,

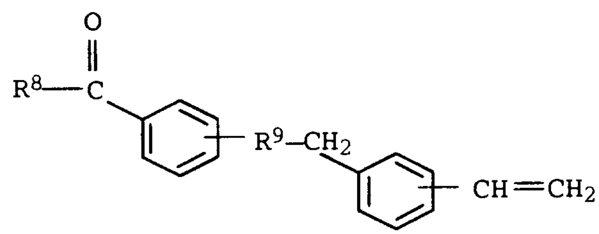

(XVI)

in der
$R^8$ $-C_nH_{2n+1}$ mit n=1 bis 3 oder $-C_6H_5$

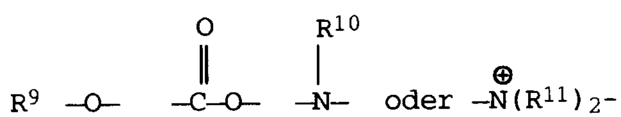

$R^{10}$ $-H$ oder $-C_nH_{2n+1}$ mit n = 1 bis 8 und

$R^{11}$ $-C_nH_{2n+1}$ mit n = 1 bis 4 bedeuten

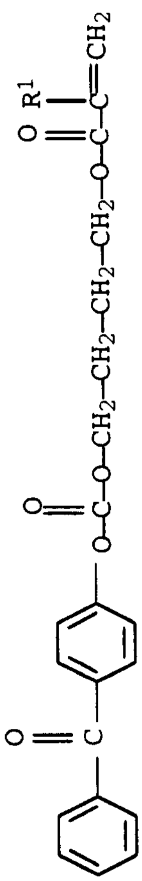

(XVII)

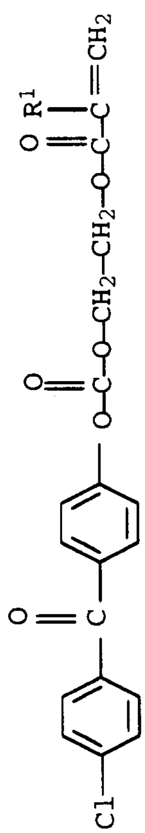

(XVIII)

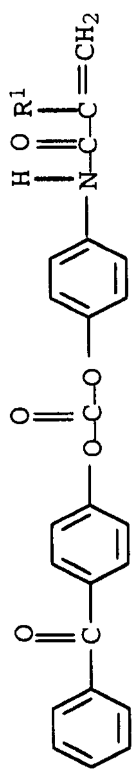

(XIX)

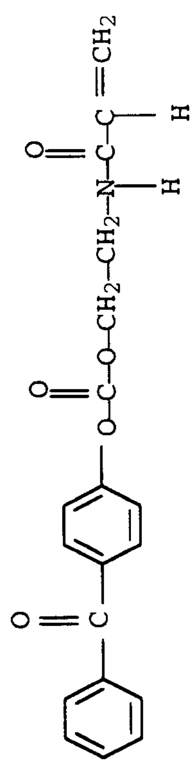

(XX)

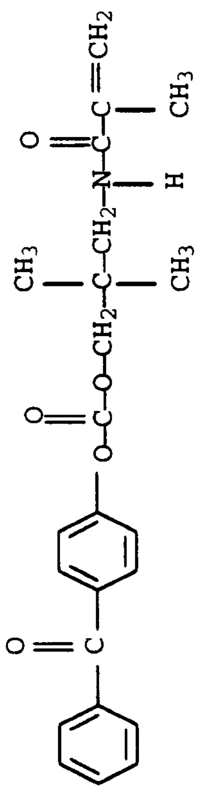

(XXI)

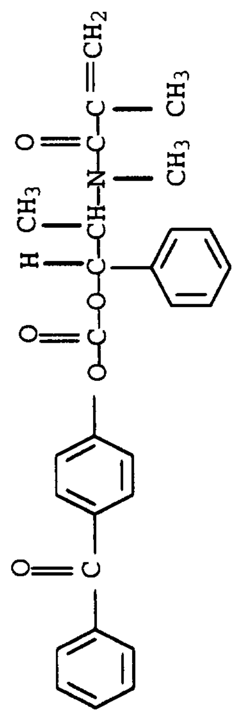

(XXII)

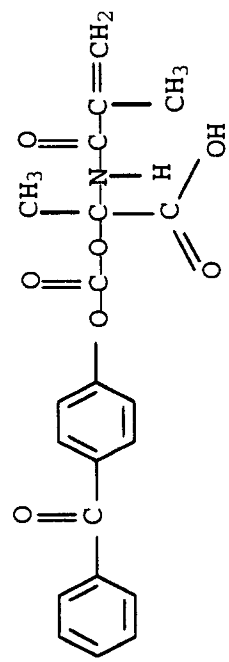

(XXIII)

(XXIV)

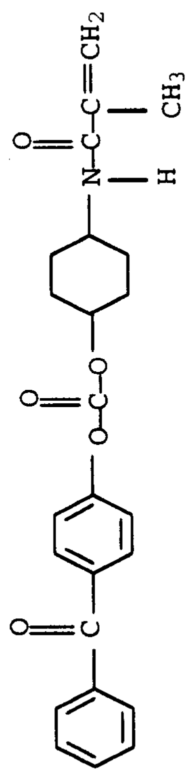

(XXV)

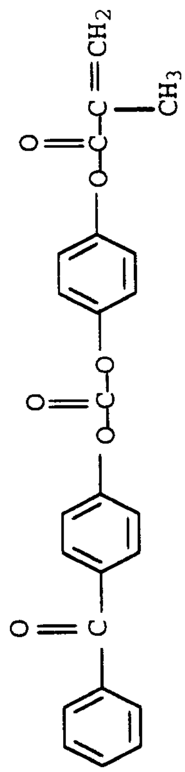

(XXVI)

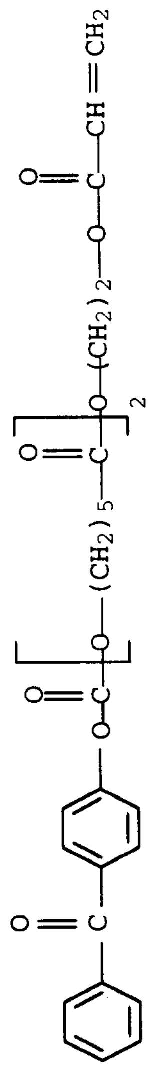

(XXVII)

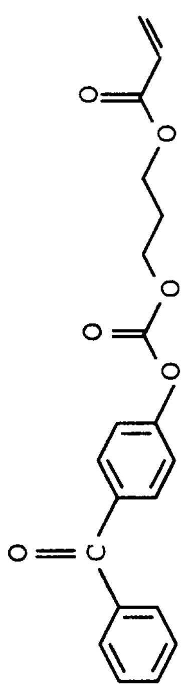

(XXVIII)

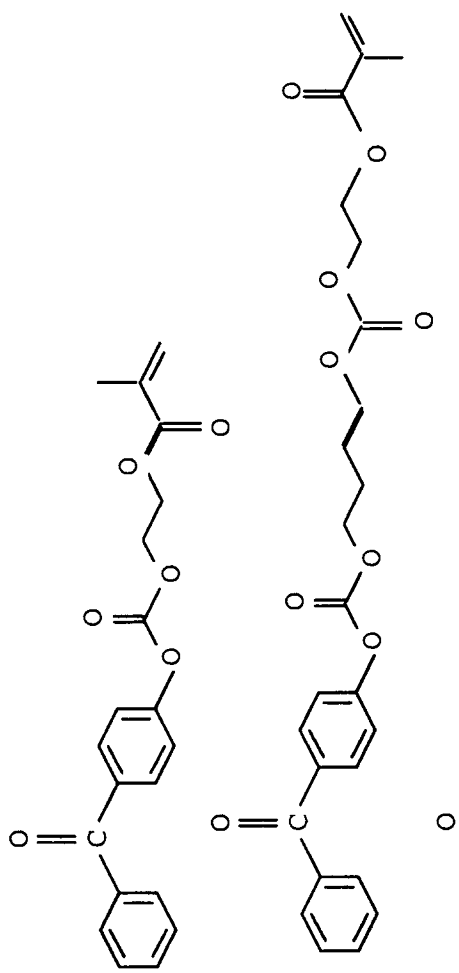

(XXIX)

(XXX)

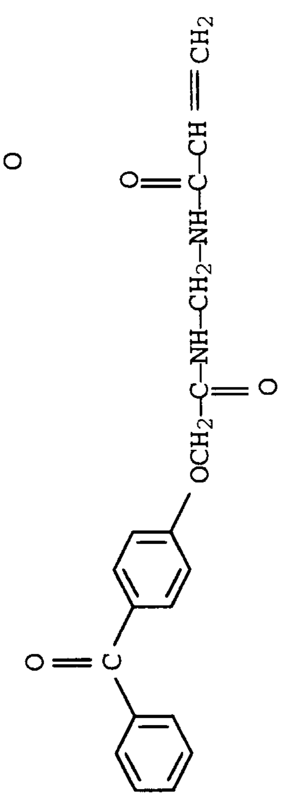

(XXXI)

(XXXII)

(XXXIII)

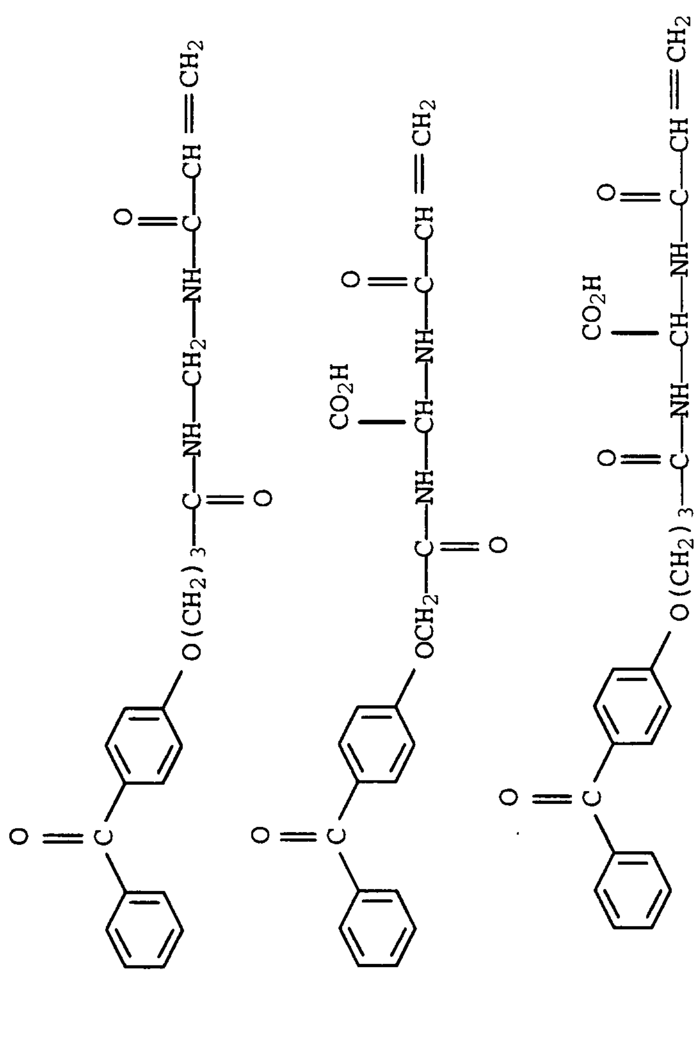

(XXXIV)

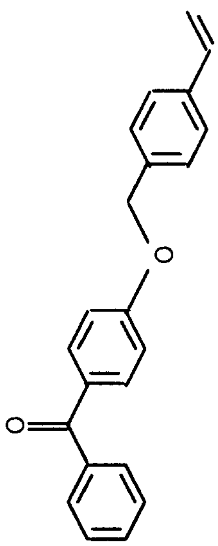

(XXXV)

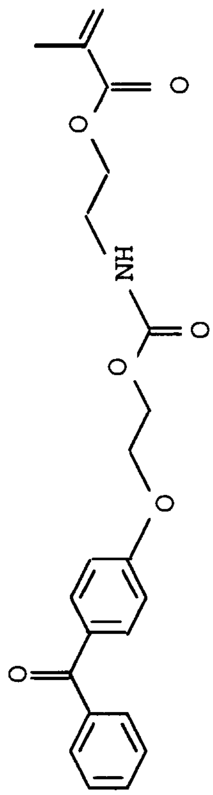

(XXXVI)

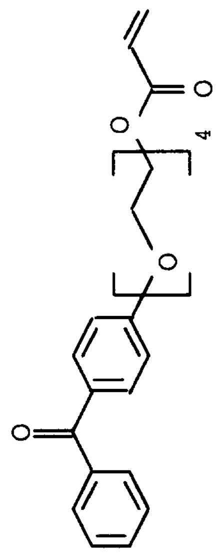

(XXXVII)

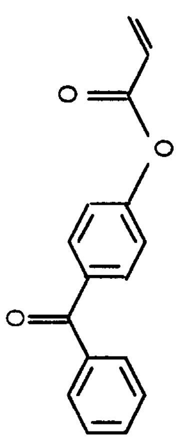

(XXXVIII)

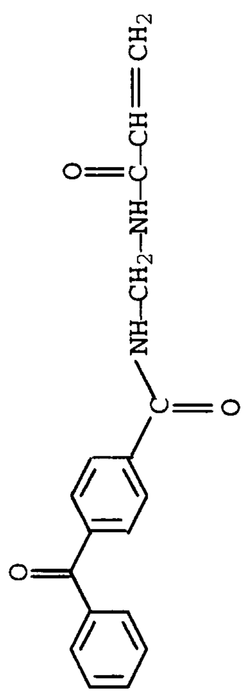

(XXXIX)

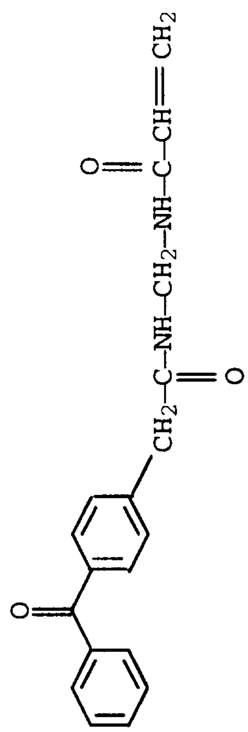

(XL)

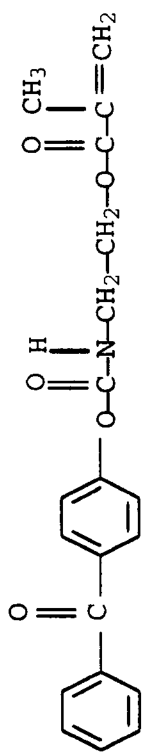

(XLI)

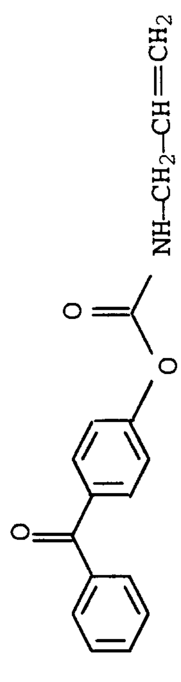

(XLII)

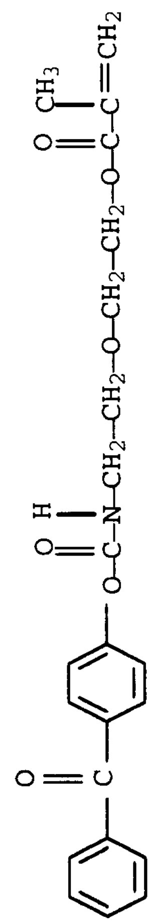

(XLIII)

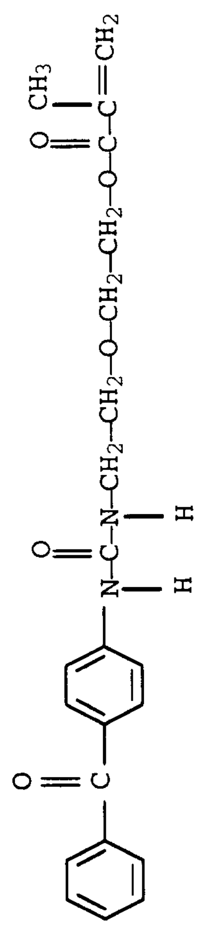

**9.** Verfahren nach einem der vorhergehenden Ansprüche, dadurch gekennzeichnet, daß die Pulverlacke durch elektrostatisches Versprühen, Wirbelsintern oder nach einer anderen für die Verarbeitung von Pulverlacken üblichen Methode auf die Oberfläche des zu lackierenden Substrates aufgebracht, dort durch Erwärmen aufgeschmolzen und nach Ausbildung eines glatt verlaufenen noch flüssigen Überzugs durch UV-Strahlung vernetzt werden oder nach teilweisem oder vollständigem Abkühlen mit UV-Strahlen vernetzt werden.

**10.** Verfahren nach einem der vorhergehenden Ansprüche, dadurch gekennzeichnet, daß die Copolymerisate vor ihrer Weiterverarbeitung zu Pulverlacken mit festen ethylenisch ungesättigten monomeren, oligomeren oder polymeren Stoffen in einem Mischungsverhältnis von 90 : 10 bis 10 : 90 abgemischt werden.

**11.** Verfahren nach einem der vorhergehenden Ansprüche, dadurch gekennzeichnet, daß die Copolymerisate C-C- Doppelbindungen enthalten.

**12.** Verfahren nach einem der vorhergehenden Ansprüche, dadurch gekennzeichnet, daß die Pulverlacke neben den einpolymerisierten intrinsischen UV-Photoinitiatoren (c) zusätzlich weitere übliche UV-Photoinitiatoren enthalten.

**13.** Verfahren nach einem der vorhergehenden Ansprüche, dadurch gekennzeichnet, daß die Pulverlacke zusätzlich übliche UV-Stabilisatoren enthalten.

Europäisches Patentamt

# EUROPÄISCHER RECHERCHENBERICHT

Nummer der Anmeldung
EP 95 10 5324

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A,D | EP-A-0 486 897 (BASF AG)<br>--- | 1 | C09D4/00<br>C09D133/06<br>C09D5/03 |
| A | EP-A-0 069 069 (CIBA-GEIGY AG)<br>* Anspruch 1; Beispiel 11 *<br>--- | 1 | |
| A,P | EP-A-0 599 676 (RHONE-POULENC CHIMIE)<br>----- | 1 | |

| RECHERCHIERTE SACHGEBIETE (Int.Cl.6) |
|---|
| C09D |

Der vorliegende Recherchenbericht wurde für alle Patentansprüche erstellt

| Recherchenort | Abschlußdatum der Recherche | Prüfer |
|---|---|---|
| DEN HAAG | 14.Juni 1995 | Glikman, J-F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)